Europäisches Patentamt

European Patent Office

Office européen des brevets

(11) Publication number: **0 440 800 A1**

## EUROPEAN PATENT APPLICATION
### published in accordance with Art. 158(3) EPC

(21) Application number: 90908656.3

(22) Date of filing: 05.06.90

(86) International application number:
PCT/JP90/00727

(87) International publication number:
WO 90/14962 (13.12.90 90/28)

(51) Int. Cl.5: **B42D 15/10, G06K 17/00, G06K 19/00, G07F 7/08, G09C 1/14**

(30) Priority: 05.06.89 JP 141086/89

(43) Date of publication of application:
**14.08.91 Bulletin 91/33**

(84) Designated Contracting States:
**DE FR GB**

(71) Applicant: **NTT DATA COMMUNICATIONS SYSTEMS CORPORATION**
26-5 Toranomon 1-chome, Minato-ku
Tokyo 105(JP)

(72) Inventor: **TAKEUCHI, Takashi**
NTT Data Comm. Syst. Corp. 26-5,
Toranomon 1-chome
Minato-ku Tokyo 105(JP)

Inventor: **HIRANO, Kazuya**
NTT Data Comm. Syst. Corp. 26-5,
Toranomon 1-chome
Minato-ku Tokyo 105(JP)

Inventor: **IEKI, Toshiharu**
NTT Data Comm. Syst. Corp. 26-5,
Toranomon 1-chome
Minato-ku Tokyo 105(JP)

(74) Representative: **Schmidt-Evers, Jürgen,**
**Dipl.-Ing. et al**
**Patentanwälte Mitscherlich, Gunschmann**
**Dr. Körber, Schmidt-Evers, Melzer, Dr. Schulz**
**Steinsdorfstrasse 10**
**W-8000 München 22(DE)**

(54) IC CARD FOR SECURITY ATTESTATION AND IC CARD SERVICE SYSTEM USING SAID IC CARD.

(57) A program for generating individual keys from a base key is stored in a memory in each SA card (12) in the production of SA cards. Next, the base key is stored in a secret area in the memory, data stored in which cannot be read out from outside, in the SA card (12) by an SA card issuing machine. When issuing individual user cards (13), a user card issuing machine transmits ID or the like of the card to the SA card (12), prepares the individual keys by use of the individual key generation program and stores the received individual keys in the secret area in the memory of the user card (13). At the time of use, the card ID or the like of the user card is transmitted from the user card (13) to the SA card (12) and the SA card prepares the individual key of the user card from the reception information and shares the individual key. In this manner, the IC card service system can execute various attestations by use of the functions such as encoding and decoding of data without making on-line inquiry to the center side.

FIG. 2

[Technical Field]

The present invention relates to an IC card service system usable in a financial facility, etc., which can gain access to a computer center, etc., from a terminal with the use of an IC card, perform an encryption communication via a personal computer network and carry out a credit transaction with the use of an IC card and, in particular, to an IC card for security authentication and an IC card service system for a user which uses the IC card.

[Background Art]

As known in the art, an IC card can store a larger amount of information therein and can be utilized f various services, such as a payment, medical care and communication through the utilization of various items of data, such as stored personal information and monetary information.

These items of information have to be kept under personal secrecy and protected from an abuse by other persons so as to obtain security. In order to achieve this object, it is proved effective to encrypt information with the use of a key of which only a card owner and service provider are aware.

A key sharing system and individual key system are both known as a key management system for IC cards. Shoji Miyakuchi and Masahiko Iwate "Individual Key Management System For IC Cards" of a preprint ISEC88-37 - Institute of Electronic and Communications Engineers of Japan - November 19, 1988 discloses, for example, an individual key management system.

In the key sharing system, however, a key is shared by all cards and, if a malign card holder reads the key of his or her own card, the security of the system is endangered as a whole. In the individual key management system, on the other hand, a base key and individual key generation program are placed in the center and, upon the individual authentication of an IC card, it is necessary to conduct a communication with the center and hence it is not possible to make an authentication off-line.

Another method may be conceived, according to which, for example, a base key is placed at a terminal. This system, however, allows ready access to be gained by other persons to information at the terminal, making it impossible to obtain security.

[Disclosure of Invention]

It is accordingly an object of the present invention to provide an IC card for security authentication and an IC card service system using it, the IC card storing an individual key generation program and base key for individual key generation to enable it to be safely used off-line.

In order to achieve the aforementioned object, use is made of an IC card which contains a security module for individual key generation and various authentications. This IC card is hereinafter referred to as an IC card (SA card) for security authentication and an IC card for a general user is referred to as a user card.

A specific terminal for setting a base key for individual key generation to the SA card upon issuance is referred to as an SA card issuing machine and a terminal for generating an individual key in the SA card and setting it to the user card is referred to as a user card issuing machine.

The SA card issuing machine is managed by a card issuer or a third-party public facility, etc., and the user card issuing machine is managed or used for each service provider.

In an actual use of an IC card service system, the SA card is held by a service provider, such as a store, and the user card is owned by the general user.

In the present invention as set out above, at the manufacturing of an SA card, a program for generating an individual key from a base key is stored in memory in the SA card. Then a base key is stored in memory, by the SA card issuing machine, at an externally inaccessible secret area of the SA card. Upon the issuance of an individual user card, an ID, etc., of the user card is transmitted to the SA card to allow an individual key to be prepared with the use of the individual key generation program and stores a received individual key in memory at a secret area of the user card.

In use, the user card transmits its ID, etc., to the SA card to allow an individual key of the user card to be prepared with the use of received information. By so doing, the individual key is shared between the two. By so doing, it is possible to perform data encryption and decryption functions.

[Brief Description of the Drawings]

Fig. 1 is an explanatory view showing an IC card (SA card) for security authentication and a computer system for utilizing a user IC card with the use of the SA card;

Fig. 2 is a block diagram showing an IC card (SA card), for security authentication, according to one embodiment of the present invention;

Fig. 3 is a view of explaining an algorithm for generating an authentication code used in the system of Fig. 2;

Fig. 4 is a view for explaining an individual key generation sequence when a user card is issued with the user of the SA card of Fig. 4; and

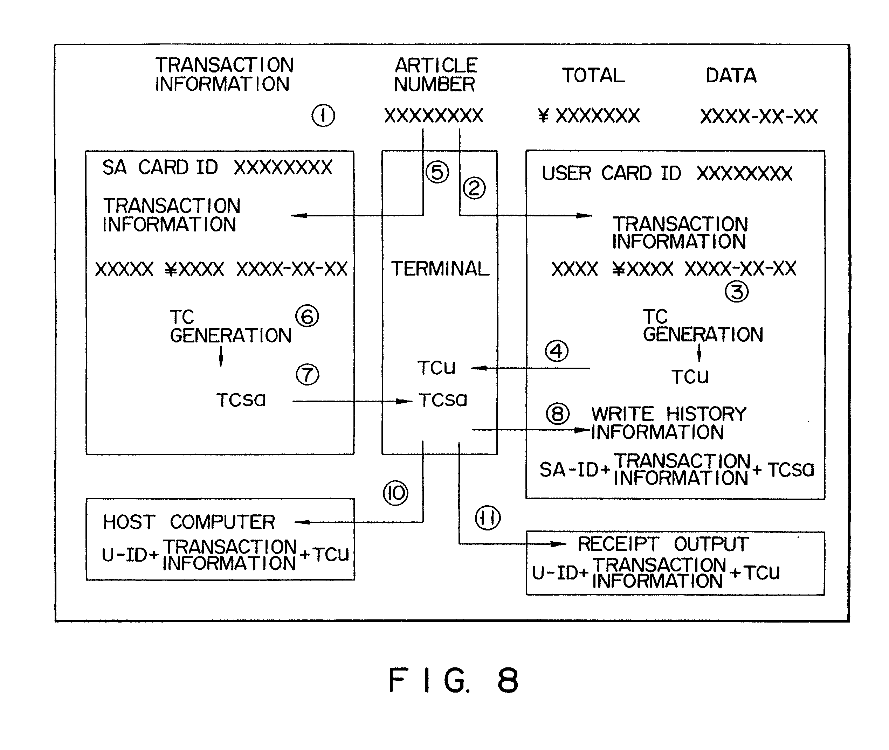

Figs. 5 to 8 are views for explaining forms of an IC card service systems of the present invention, Fig. 5 being a sequence of authentication between the SA card and the user card, Fig. 6 being a view for explaining a sequence for returning a result of mutual authentication to a service terminal, Figs. 7A, 7B and 7C showing a sequence of message authentication and Fig. 8 being a view for explaining an information flow between respective constituent elements in the system.

[Best Mode of Carrying Out the Invention]

(A) Credit Settling System

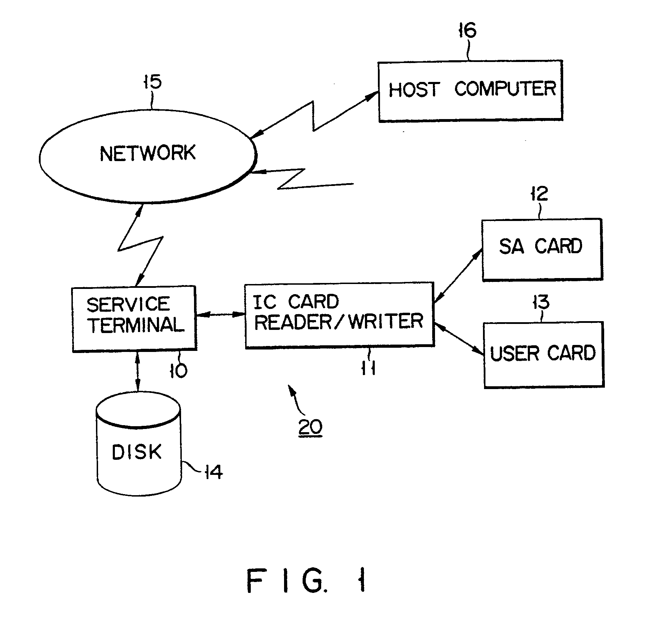

Fig. 1 shows a computer system (user IC card service system) utilizing a security authenticating IC card (SA card). In Fig. 1, a service provider, such as a store, installs a service terminal device 10 and reader/writer 11 in the store and an SA card 12 and user card 13 are adapted to be inserted into the reader/writer 11. In an actual transaction, a cross-reference is first made between the SA card 12 and the user card 13. Upon the performance of a transaction, an electronic signature exchange is done between the two for the transaction to be cross-referred for authentication in the conduction of the dealing. The transaction data, user card's signature, etc., are stored in a disc 14 and so on and transmitted, by a subsequent batch-processing step for instance, to a host computer 16 of a center via a network 15 to perform various authentications involved in a payment process. In such a system feature, no one-by-one on-line reference from the service terminal 10 to the computer 16 in the center is required upon the authentication of the user IC card. It is possible to perform an authenticating operation between the user IC card and the SA card and hence to reduce an operation cost from a standpoint of economy.

(B) Inner Structure of IC Card

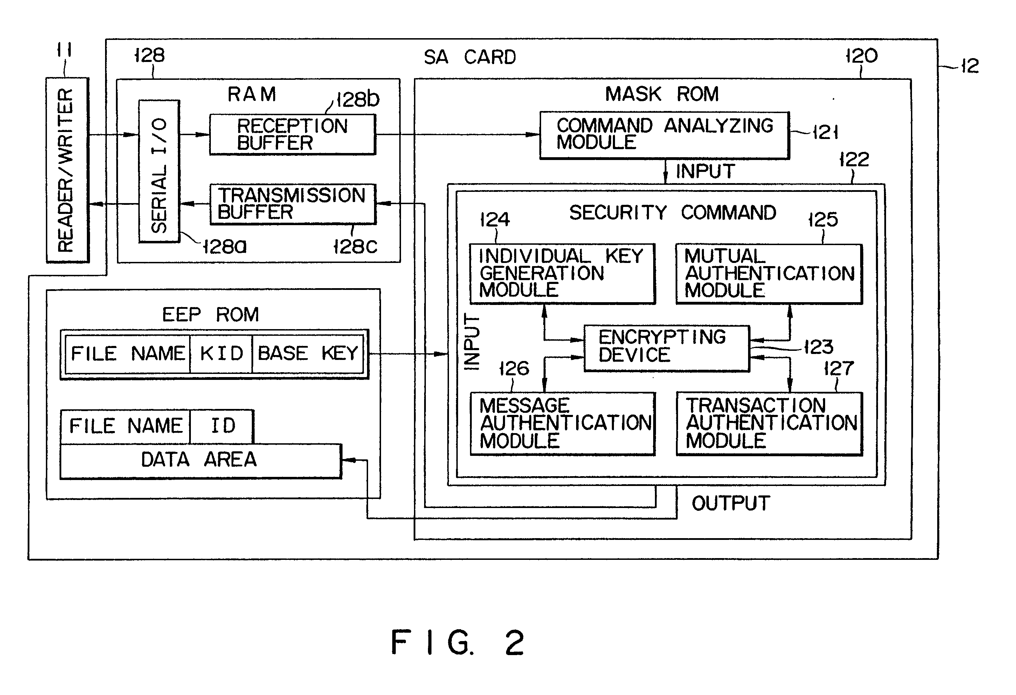

Fig. 2 is a block diagram showing a security authentication IC card (SA card 12) as employed in the service system of the present invention.

A command analyzing module 121 and security module 122 are built into a mask ROM 120 in the SA card 12. The security module 122 performs its functions by the following modules 124 to 127 with an encrypting device 123 as a nucleus:
1) an individual key generation module 124
2) mutual authentication module 125
3) message authentication module 126
4) transaction authentication module 127
In accordance with an algorithm as set out below, the generation module 124 generates an individual key with the use of a work area for the security module 122 and base key for individual key generation. The modules 125, 126 and 127 perform their predetermined processings, using an individual key generated by the individual key generation module 124.

In Fig. 1, a RAM 128 serves as an interface between the mask ROM 120 in the SA card 12 and the external reader/writer 11 and includes a serial I/O 128a, receiving buffer 128b and transmitting buffer 128. In an SA card 12, an EEPROM 129 performs data input/output functions with respect to the security module 122 in the mask ROM 120 and contains respective memory areas, such as a file name, KID, base key, file name, ID, data area and so on as will be set forth below.

(C) Explanation of Terms

The terms principally employed throughout the present specification will be explained below.

(1) Individual Key Management System

This is a system using keys set as user card's secret keys which are different for each card.

(2) Authentication

The authentication includes [party's authentication] for correctly recognizing the identity of a communication party using a secret encryption key, [mutual authentication] for recognizing each other's identity simultaneously, [message authentication] for authenticating the presence or absence of the tampering of a massage by a third party other than information provider and receiving persons, and [transaction authentication] for authenticating a transaction made using any specific user card.

(3) Authenticating Code (MAC, TC, etc., as will be set out below) generation Algorithm

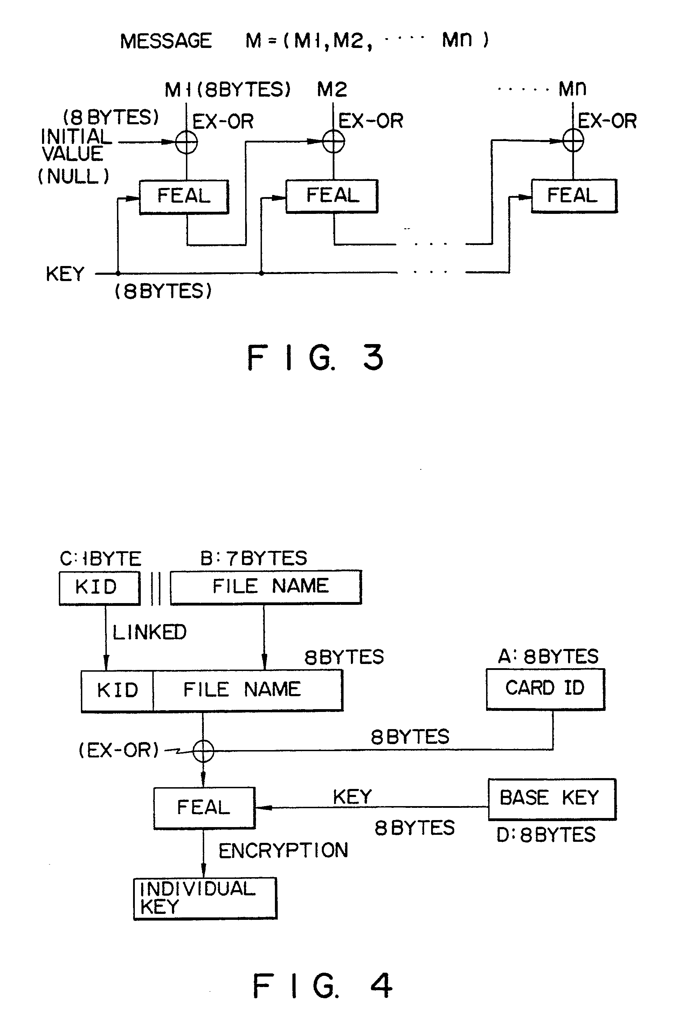

Given data (a message, transaction information, etc.) is divided into 8-byte units and encrypted by the same encryption key, starting from its leading portion as shown in Fig. 3, and a final 8-byte encryption result is delivered as an output. This is called an authenticating code generation algorithm. The result output is hereinafter called as an MAC (massage authentication code) for a message authentication and as a TC (transaction authentication code) for a transaction authentication. In order to generate TC, it is necessary to employ an individual key.

(D) Setting of IC Card's Individual Key & How to Use It

(1) An Example of How to Set an Individual Key on a Card Issuing Machine When a User Card Is Issued.

Upon issuance of a user card, a user card issuing machine 20 as identified by 20 in Fig. 1 for example requests the issuance of an individual key to, for example, the SA card 12. The machine receives an individual key as generated from the SA card 12 and sets it on the user card 13 to be issued. The way of how to generate an individual key in the SA card 12 (Fig. 4) is as follows. The SA card, upon the setting of the individual key, involves the following processing with the use of

A: a card ID (8-byte) individually allocated to the user card

B: a file name containing an area stored with the individual key (7 byte: For data < 7 bytes, a NULL (O) is inserted until 7 bytes are reached and, at data > 7 bytes, an exceeding portion for example is cut.)

C: an area number = KID (1 byte) of an area of the individual key

D: a base key (8 bytes).

The user card issuing machine 20 first reads out the ID of the user card 13 as A and transmits it to the SA card 12. The data B, C and D are initially set, by an SA card issuing machine for instance, in the card.

In Fig. 4, data (C + B) is prepared by combining KID (1 byte) of C and file name B of effective 7 bytes and is supplied to one input of an exclusive OR (EX-OR) device and the card ID of a leading effective 8-byte portion of the user card 13 is added to the other input of the EX-OR device.

Then an encryption processing (for example, FEAL) 123 is performed, by the encrypting device in the security module 122, with the use of an 8-byte code plaintext and the base key as an encrypted code in which case the code is generated from the output side of EX-OR device. The encrypted word (8 bytes) of the output information is employed as an individual key.

Finally, the SA card 12 transmits the individual key to the user card issuing machine 20. The user card issuing machine 20 receives the individual key and writes it onto the user card 12.

A brief explanation will be given below of FEAL as used for encryption made according to the present invention. SHOJI MIYAMOTO [FEAL-8 Encryption algorithm] is disclosed, as FEAL above, in an NTT Practical Research Report vol 37, No. 4/5.

FEAL is an argorithm-opened type secret key code, that is, a code which is characterized by a high-speed processing. The same key is employed for encryption and decryption and dealt with as a secret. The processing speed is of the order of 120 Kb/s under a program of 0.7 K byte as described by an assembler for a 16-bit microprocessor (8086) and of the order of above 20 Kg/s under a program of 0.4 byte for an 8-bit microprocessor for use in an IC card. In this way, FEAL is smaller in a program size and faster in processing speed and is fitted for software processing. Therefore, it is fitted for a code function built in the IC card.

(2) Individual Key Management Feature at the Operation Service

If both a given user card 13 and key are required for various authentications by holding a base key in the SA card 12, the SA card 13 can generate an individual key for the user card in communication, the way of which is as shown in Fig. 3.

A sequence of an individual key generation will be done, for example, in the following way.

(a) 8-byte data is generated with a predetermined KID + file name.

(b) The 8-byte data generated at (a) and the leading 8 bytes of the card ID of the user card are EX-ORed together.

(c) A result obtained by the processing (b) above and 8-byte base key are input to the encrypting device 123 in the security module 122 to perform an encryption process, and an output encryption serves as an individual key.

(E) Mutual Authentication of SA Card 12 and User Card 13

(1) Principle of Mutual Authentication

By the "party's authentication" is meant such an authentication that the secret key to be authenticated is the same as that on the authenticated side, by utilizing their code, without being directly identified to each other. The mutual recognition of the party's authentication is made from both parties, the algorithm of which is as follows:

① A recognizing party transmits generated random numbers to the recognized side.

② The party on the recognized side encrypts the random numbers, thus transmitted from the recognizing party's side, with the secret key and sends a result back to the recognizing side.

③ The party on the recognized side also independently encrypts the transmitted random numbers with his or her own secret key and compares it with the random numbers sent back from the recognized side.

④ If there is a coincidence between the two, the original random numbers are common between the two, meaning that both the parties have a common secret key. It is thus possible to recognize each other's true identity on the recognized side.

## (2) Example of Mutual Authentication

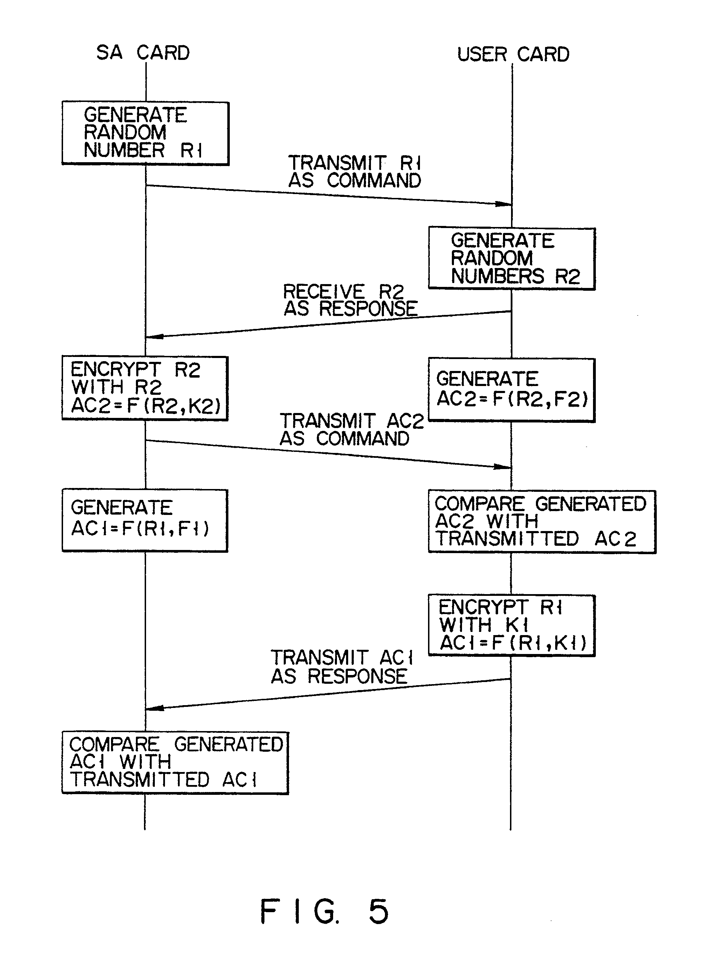

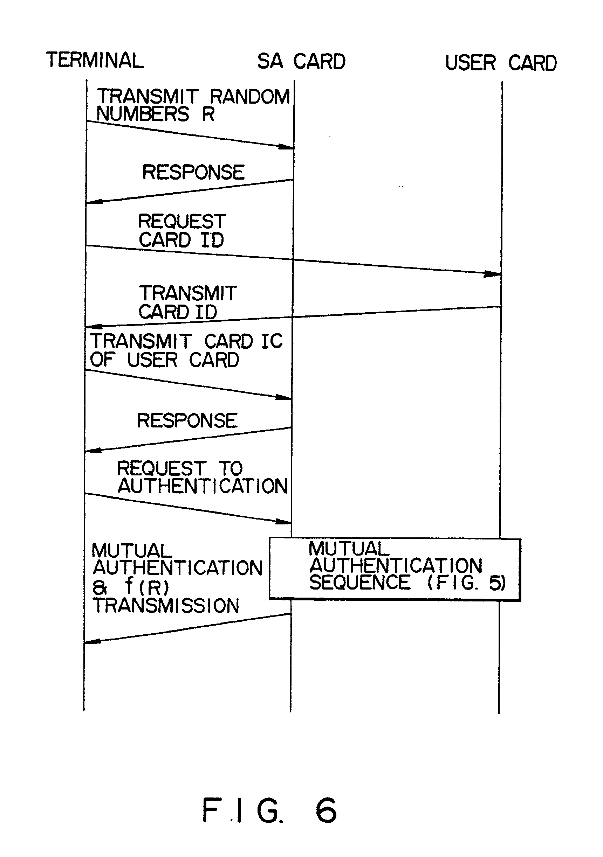

If the aforementioned steps are implemented, as the "mutual authentication", on the form of an SA card-to-user card command/response, it will be as shown, for example, in Fig. 5. Let it be assumed that K1 represents a common secret key for authenticating the user card by the SA card and K2, a common secret key for authenticating the SA card by the user card. The SA card generates random numbers R1 and transmits them as a command to the user card on the recognized side. The user card generates different random numbers R2 and regards them as a response. Then the SA card encrypts R2 with a key K2 and transmits a result F (K2, R2) command to the user card. The user card compares a result of encryption made by itself for R2 with a result of reception and regards a result of comparison as a response, that is, a result of authentication made by the SA card for the SA card. Further, if, here, the authentication is correct, the user card encrypts R1 with the key K1 and also transmits a result F (K1, R1) as a response. The SA card also encrypts R1 with K1 and uses a result for comparison. This is an authentication made, by the SA card, for the user card.

## (F) When Result of Mutual Authentication Between SA Card and User Card Is Returned to Service Terminal

The service terminal initially transmits random numbers R to the SA card. When the SA card sends a result of mutual authentication for the user card back to the service terminal, it is done so together with f(R) as a simple function f(x) (for example, f(x) = x + 1). The random numbers R and function f are kept in secrecy against the user card. Even if a masquerading response indicating that a mutual authentication is OK is sent from the user card directly to the service terminal, the party on the service terminal is not deceived by that response. This sequence is shown in Fig. 6.

## (G) Massage Authentication by SA Card

## (1) Principle of the Massage Authentication

In accordance with a MAC generating algorithm, a MAC is prepared from a transmitting message with the use of a secret key common to the party on the transmitting side and that on the receiving side. MAC and data are transmitted to the receiving side. The party on the receiving side, similarly, prepares its own MAC based on the received massage and, if there is a coincidence between that MAC and MAC prepared on the transmitting side, he or she can confirm that the received massage is not tampered with.

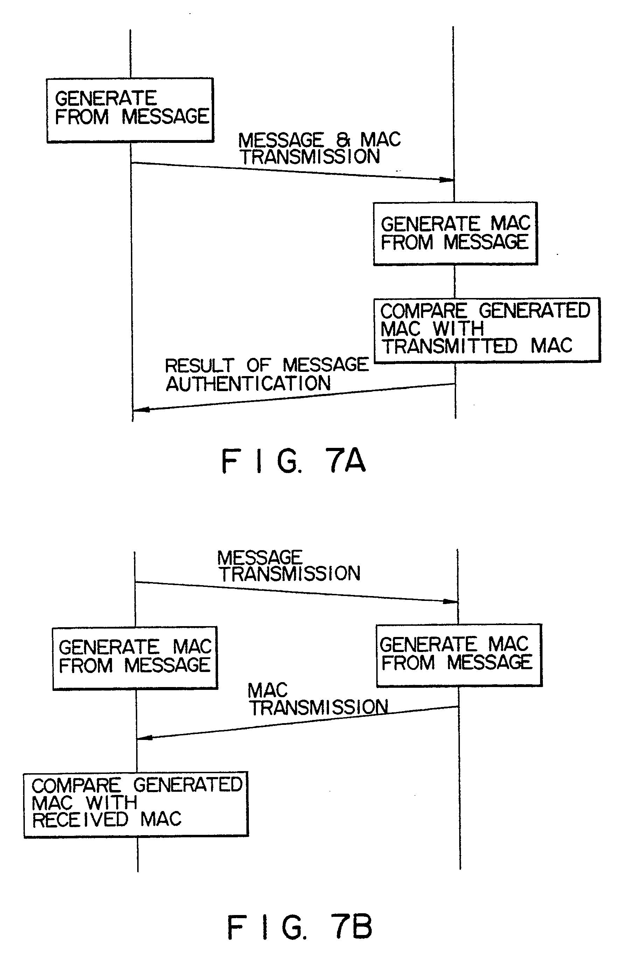

It is also possible to make the following massage authentication. The party on the transmitting side transmits only a massage to the receiving side and the receiving party prepares MAC from the received massage and sends it back to the transmitting party. The transmitting party independently prepares a MAC from his or her own transmitted massage, compares that MAC with MAC prepared on the receiving party and can confirm whether or not the massage has duly be received. Figs. 7A and 7B show the message authentication action as set out above.

## (2) Example of the Massage Authentication

The service provider implements a massage authentication relative to the user card with the use of the SA card as will be set forth below. Here it is assumed that the SA card and user card have a common secret key Km for massage authentication.

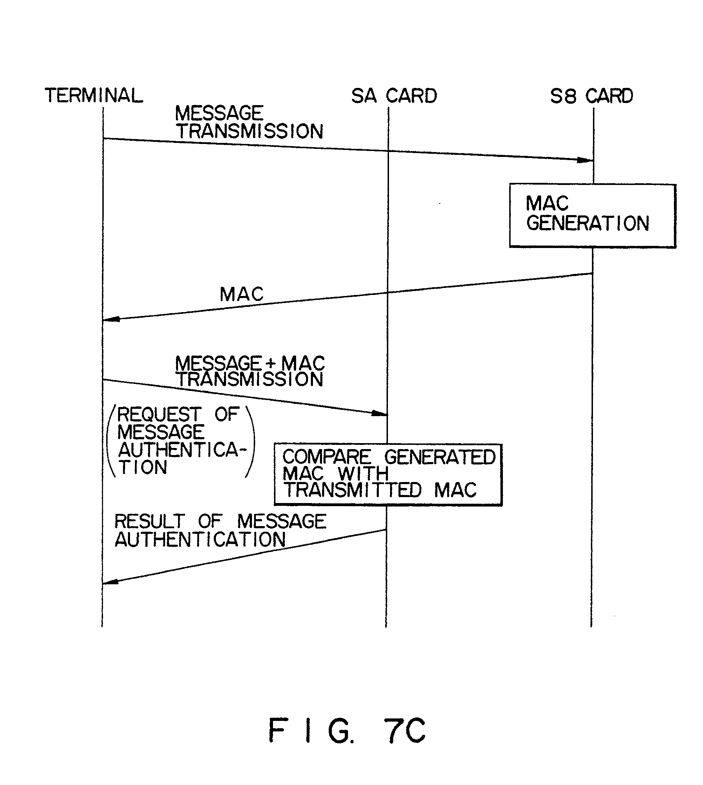

As shown in Fig. 7C, the service provider (an operation service terminal, etc.) transmits a message M to the user card. The user card generates a MAC based on a received massage M with the use of its own KM and sends it back to the service provider. The service provider transmits an initially transmitted massage M and received MAC to the SA card and requests them to make a massage authentication there. The SA card prepares a MAC based on the received M with the use of its own Km, compares it with the received MAC, performs their massage authentication and sends a result of authentication back to the service provider.

## (H) Mutual Transaction Authentication between SA Card and User Card

## (1) Principle of the Transaction Authentication

The transaction information is a date of transaction, article code, unit price, quantity, and others. The "transaction authentication includes an action, such as the specifying of a card used in a transaction of interest, confirming of a validity of transaction information, etc.

The issuing of the respective cards is carried out as will be set forth below.

① At a Time of Issuing the SA Card

An individual key for the SA card is generated with a secret parameter (a base key for the SA card) known by the SA card issuing machine, and set.

② At a Time of Issuing the User Card

An individual key for the user card is generated based on an individual key generation base key set in the SA card, and set.

For the aforementioned transaction information, the SA card and user card prepare their TC's based on a TC generation algorithm with the use of the individual keys set at the issuing state. Let it be assumed that TC of SA card and that of the user card represent TCsa and TCu, respectively.

TCsa is conserved in the user card and TCu is con-served in the SA card or a service provider, host computer, etc., having the SA card, both being employed to prove a transaction.

(2) Example of a Sequence of Transaction Authentication

A processing sequence of transaction authentication will be explained below, assuming an actual transaction of purchasing goods in the store and making a payment for the goods with the use of an IC card. Fig. 6 shows the way of how to process, in the system, transaction information, information generated for authentication, etc.

① Transaction information, such as the number of purchased goods, amount paid and transaction date, are input to the peripheral terminal and displayed on a display unit.

② The transaction information is transmitted to the user card.

③ In the user card, a transaction authentication card TC (TCu) of the user card is generated.

④ TCu is transmitted from the user card to the terminal.

⑤ The transaction information is transmitted to the SA card.

⑥ In the SA card, a transaction authentication code TCsa of the SA card is generated.

⑦ TCsa is transmitted from the SA card to the terminal.

⑧ History information 1 (ID of SA card + transaction information + TCsa) is transmitted to the user card.

⑨ The history information 1 is written into the user card.

⑩ History information 2 (ID of the user card + transaction information + TCu) is received at the terminal and stored, for example, in a disk host.

⑪ The history information 2 (ID of the user card + transaction information + TCu) is transmitted to a printer and delivers a receipt sheet as an output.

⑫ For further transaction to be performed, the aforementioned sequence is repeated and, at the end of the transaction, an end sequence is carried out.

As evident from the above, the present invention exhibits specific effects as will be set out below.

(a) Since TCu is generated based on a TC generation algorithm with the use of the transaction information and individual key specific for each user card, if the party reviews the transaction information and TCu, then he or she can identify the user card with which the transaction is carried out.

(b) The card ID, transaction information, etc. of the user card can be stored in the store, system host, etc., and can be used for establishing that a transaction is surely conducted with the user card involved in which case the information, etc., are authenticated with the use of the SA card, etc. Even if the transaction data of the user card is to be tampered with or illegally used after transactions, any illegal action cannot be done because the illegality of data involved is detected by the transaction authentication using the SA card.

(c) With the individual key provided for the SA card, TCsa is prepared for the transaction information with the use of the individual key and can be stored in memory at a transaction history area of the user card. Since a client can prove any specific transaction in any specific store, it is not possible to, after the end of the transaction, tamper with the transaction data, or carry out any illegal transaction, on the "store" side.

Whether or not TCu and TCsa as generated from transaction information are true can be proved utilizing a public facility, not a client or a store, as a third-party institution. By so doing, it is possible to implement the same security system as that for a digital signature system and to provide an exceptionally high exactness of transaction data as well as a high safety with which the transaction can be carried out.

[Industrial Applicability]

The present invention can be applied to an IC card service system, in general, including a financial system and so on by gaining access to a computer center, etc., from the terminal, performing a coded communication via a personal computer network, or carrying out a credit transaction with the use of an IC card.

**Claims**

1. An integrated-circuit (IC) card for security authentication which includes an information processing unit, such as a microcomputer, and a memory for storing a program, which is characterized by comprising:

a security module for generating an individual key and carrying out various authentications; and

a programmable read only memory which stores an algorithm having an individual key common to other user IC cards, the individual key being usable at a time of authentication, and a base key.

2. An integrated-circuit card service system characterized by comprising terminal means for allowing a predetermined intercommunication between an IC card for security authentication as claimed in claim 1 and a user IC card, the authentication of the user IC card being able to be done without being referred to a center side from the terminal means on-line.

F I G. 1

F I G.  2

EP 0 440 800 A1

MESSAGE    M = ( M1, M2, · · · · Mn )

F I G. 3

F I G. 4

SA CARD                  USER CARD

GENERATE
RANDOM
NUMBER R1

TRANSMIT R1
AS COMMAND

GENERATE
RANDOM
NUMBERS R2

RECEIVE R2
AS RESPONSE

ENCRYPT R2
WITH R2
$AC2 = F(R2, K2)$

GENERATE
$AC2 = F(R2, F2)$

TRANSMIT AC2
AS COMMAND

GENERATE
$AC1 = F(R1, F1)$

COMPARE GENERATED
AC2 WITH
TRANSMITTED AC2

ENCRYPT R1
WITH K1
$AC1 = F(R1, K1)$

TRANSMIT AC1
AS RESPONSE

COMPARE GENERATED
AC1 WITH
TRANSMITTED AC1

# FIG. 5

TERMINAL     SA CARD     USER CARD

TRANSMIT RANDOM NUMBERS R

RESPONSE

REQUEST CARD ID

TRANSMIT CARD ID

TRANSMIT CARD IC OF USER CARD

RESPONSE

REQUEST TO AUTHENTICATION

MUTUAL AUTHENTICATION & f(R) TRANSMISSION

MUTUAL AUTHENTICATION SEQUENCE (FIG. 5)

F.I G. 6

F I G. 7A

F I G. 7B

F I G. 7C

FIG. 8

# INTERNATIONAL SEARCH REPORT

International Application No PCT/JP90/00727

## I. CLASSIFICATION OF SUBJECT MATTER (if several classification symbols apply, indicate all) [6]

According to International Patent Classification (IPC) or to both National Classification and IPC

Int. Cl[5]   B42D15/10, G06K17/00, 19/00, G07F7/08, G09C1/14

## II. FIELDS SEARCHED

### Minimum Documentation Searched [7]

| Classification System | Classification Symbols |
|---|---|
| IPC | B42D15/10, G06F9/06, 15/00, G06K17/00, 19/00, G07F7/08, G09C1/14 |

Documentation Searched other than Minimum Documentation
to the Extent that such Documents are Included in the Fields Searched [6]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 62-43790 (Matsushita Electric Ind. Co., Ltd.), 25 February 1987 (25. 02. 87), (Family: none) | 1 - 2 |
| Y | JP, A, 62-189593 (Hitachi, Ltd.), 19 August 1987 (19. 08. 87) & DE, A1, 3,704,814 & US, A, 4,885,788 | 1 - 2 |
| Y | JP, A, 63-70634 (Toshiba Corp.), 30 March 1988 (30. 03. 88), (Family: none) | 1 - 2 |
| A | JP, A, 54-87033 (International Business Machines Corp.), 11 July 1979 (11. 07. 79) & EP, A1, 2,388 & US, A, 4,257,236 & US, A, 4,386,234 & CA, A1, 1,149,483 | 1 - 2 |
| A | JP, A, 57-86964 (Hitachi, Ltd.), 31 May 1982 (31. 05. 82), (Family: none) | 1 - 2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| August 6, 1990 (06. 08. 90) | August 27, 1990 (27. 08. 90) |

| International Searching Authority | Signature of Authorized Officer |
|---|---|
| Japanese Patent Office | |

Form PCT/ISA/210 (second sheet) (January 1985)

| FURTHER INFORMATION CONTINUED FROM THE SECOND SHEET | | |
|---|---|---|
| A | JP, A, 61-163746 (Fujitsu Ltd.), 24 July 1986 (24. 07. 86), (Family: none) | 1 - 2 |

**V.☐ OBSERVATIONS WHERE CERTAIN CLAIMS WERE FOUND UNSEARCHABLE** [1]

This international search report has not been established in respect of certain claims under Article 17(2) (a) for the following reasons:

1.☐ Claim numbers     , because they relate to subject matter not required to be searched by this Authority, namely:

2.☐ Claim numbers     , because they relate to parts of the international application that do not comply with the prescribed requirements to such an extent that no meaningful international search can be carried out, specifically:

3.☐ Claim numbers ........ ..., because they are dependent claims and are not drafted in accordance with the second and third sentences of PCT Rule 6.4(a).

**VI.☐ OBSERVATIONS WHERE UNITY OF INVENTION IS LACKING** [2]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (January 1985)